# EUROPEAN PATENT SPECIFICATION

(11) **EP 3 983 214 B1**
(45) Date of publication and mention of the grant of the patent: **03.07.2024**
(21) Application number: 20742900.2
(22) Date of filing: 28.05.2020
(51) Int. Cl.: B29D 30/72, B29D 30/06

(54) **INSERT FOR A MOULD FOR VULCANISING TYRES FOR VEHICLE WHEELS**
EINSATZ FÜR EINE FORM ZUM VULKANISIEREN VON REIFEN FÜR FAHRZEUGRÄDER
INSERT POUR UN MOULE DE VULCANISATION DES PNEUS DE VEHICULE

(30) Priority: 13.06.2019 IT 201900008880
(43) Date of publication of application: 20.04.2022
(73) Proprietor: Pirelli Tyre S.p.A., 20126 Milano (IT)
(72) Inventor: MAZZUCATO, Angelo, 20126 Milano (IT); BALINI, Alfredo, 20126 Milano (IT); MAZZOCCHI, Oscar, 20126 Milano (IT)
(74) Representative: Susanetto, Carlo
(86) International application number: PCT/IB2020/055054
(87) International publication number: WO 2020/250069

(56) References cited:
- EP-A1- 0 522 781
- WO-A1-2008/009724
- WO-A1-2009/007790
- WO-A1-2016/016698
- DE-A1-102016 215 732
- JP-A- 2000 142 026
- US-A- 4 547 139
- US-A1- 2014 216 622
- US-A1- 2015 021 813
- US-A1- 2017 050 473
- US-A1- 2017 157 870
- US-B1- 10 029 433

## Description

The present invention relates to an insert for a mould for vulcanising tyres for vehicle wheels and a mould for vulcanising tyres including said insert.

A tyre generally has a carcass structure toroidally shaped about an axis of rotation and comprising at least one carcass ply with terminal edges engaged in respective annular anchoring structures, called bead cores.

In a position radially outside the carcass structure, a belt structure is provided, comprising, in the case of car tyres, at least two radially overlapping strips of rubberised fabric with reinforcement cords, and preferably also a third layer of textile or metal cords, arranged circumferentially (at 0 degrees) at least on the ends of the underlying belt strips, in a radially outer position. A tread band, made of elastomeric material, on which a tread surface intended for contact with the road surface is defined, is applied radially outside the belt structure.

In addition, in a position axially outside the carcass structure, there are applied two sidewalls extended from the tread band to the radially inner ends of the tyre, defined by a layer of rubberised ply (beads) surrounding the bead cores.

The process for producing a tyre generally involves a building phase in which the various components of the tyre are made and assembled, and a subsequent phase of moulding and vulcanisation of the tyre aimed to define the structure of the tyre and in particular its tread band and sidewalls.

To this end, the built but not yet moulded and vulcanised tyre (so-called "green" tyre) is closed inside a vulcanising mould and subjected for an appropriate period of time to temperature conditions so as to determine the desired degree of crosslinking of the elastomeric material.

In addition, during this phase, the green tyre is pressed against the inner surfaces of the vulcanising mould, which are advantageously shaped according to the geometry and configuration to be given to the outer surfaces of the tyre.

In particular, during the moulding phase, the shape and arrangement of grooves, notches and blocks provided into the tread surface, collectively referred to as the "tread pattern", are defined, which contribute to a large extent to determining the behaviour of the tyre on different road surfaces.

In addition, on the inner surfaces of the mould portions in contact with the tyre sidewalls (the "sidewall plate" of the mould), alphanumeric characters and/or illustrations are generally formed, which, thanks to the moulding phase, remain imprinted on the sidewalls so that users may immediately see important information such as the brand, model, logo, size and performance characteristics of the tyre.

In addition, additional information may also be displayed on the sidewalls of the tyre in coded form, for example in the form of barcodes or matrix codes. The latter, more commonly known as 'QR codes', are also increasingly favoured for the greater amount of information they are able to contain for the same surface area occupied. In addition, the range of applications that allow them to be read by commonly used portable electronic devices, such as smartphones, has further encouraged the use of this type of code.

The QR codes are formed by a standard size matrix, typically square, within which two pluralities of basic units having different optical properties, usually small squares of contrasting colour (for example black and white, or more generally light and dark), are appropriately arranged. The different optical properties make it possible to identify the type of basic units using an optical reader, which transforms them into binary code and then decodes the information.

The information shown in coded form on the sidewalls of the tyre may include a few dozen descriptive product parameters, such as tyre size, load index, speed index, seasonality and tyre type. This information may also include details relating to the tyre's production date, typically the working week, which, however, needs to be continuously updated. For this reason, forming these codes directly on the inner surface of the sidewall plate of the mould is very expensive.

In order to solve this problem, the code to be moulded on the sidewall of the tyre may be formed on an insert, which is removably housed into a seat formed in a sidewall plate of the mould. In this case, projections and/or recesses capable of producing corresponding recesses and/or projections on the sidewall surface of the corresponding tyre are formed suitably on the surface of the insert intended to come into contact with the green tyre sidewall during the moulding phase. The recesses or projections present on the sidewall surface of the tyre reflect light differently from the surface without such projections or recesses, defining a corresponding plurality of portions of the sidewall surface that are lighter or darker than the smooth surface surrounding them.

In this way, an optical reader may recognise lighter and darker areas and associate each of these areas (which, in fact, may be associated with pixels) to a type of basic unit of a QR code.

The insert is held firmly within the seat by one or more screws which, when passing through the sidewall plate, engage in a corresponding threaded hole formed in the insert.

This solution makes it possible to change the code to be moulded on the sidewall of the tyre by replacing the insert, an operation that is clearly less costly than changing the inner surface of the entire sidewall plate.

WO 2009/007790 and US 4547139 disclose respective tyre moulding devices according to the prior art.

The term "roughness" of a surface means the arithmetic mean value of the deviations (considered in absolute value), in terms of distance, of the actual profile of the surface with respect to the mean line. This roughness, also known as "average roughness", has the dimension of a length and is indicated by Ra.

The Applicant preliminarily noted that the need to periodically replace the inserts to be positioned in the vulcanising moulds involves non-negligible costs in terms of production of the inserts.

In an effort to contain production costs, the Applicant therefore considered an approach on which all the information that needs to be moulded on the sidewall of the tyre and that needs to be replaced periodically is printed on a surface of the insert, while the entire remaining part of the insert, *per se,* is not affected by the change in the information to be moulded.

The Applicant then felt that the production costs related to the periodic replacement of the inserts could be further reduced by limiting the portion of insert to be replaced to the greatest possible extent.

Lastly, the Applicant found that an insert in which the information to be moulded on the sidewall of the tyre is formed on the surface of a plate which may be removably coupled to a main body of the insert makes it possible to minimise the material that is to be replaced.

In particular, in a first aspect, the invention relates to an insert for a mould for vulcanising tyres for vehicle wheels according to claim 1.

In a second aspect, one embodiment of the present invention relates to a mould for vulcanising tyres for vehicle wheels, according to dependent claim 15.

Thanks to these features, the insert and the mould according to the present invention may mould on the tyre sidewall the updated information by simply replacing the plate instead of the entire insert.

In addition, the force that keeps the plate coupled to the main body is mainly discharged at the ridge defined on the perimeter edge of the main body, consequently increasing the sealing action of the plate on the main body and avoiding the possible entry of elastomeric compound between the plate and the main body and, consequently, avoiding any tearing of the compound during the phase of removal of the vulcanised tyre from the mould.

The present invention, in at least one of the above aspects, may have at least one of the following additional preferred features.

In one embodiment, said projections and/or said recesses are substantially identical to one another.

In a preferred embodiment, each of said recesses and/or said projections formed on said plate comprises a base, at said base surface of said plate, which base has a diameter of between 0.4 and 0.49 mm.

In this way, the projections (or recesses) are shaped to form a corresponding plurality of recesses (or projections) on the outer surface of the tyre sidewall with appropriate dimensions to form corresponding basic units of an image (pixels), such as a QR code.

Preferably, each of said recesses and/or projections formed on said plate extends from said base surface of said plate by a height of between 0.5 and 0.7 mm.

In this way, the recesses formed by the projections on the outer surface of the sidewall of the tyre do not in any way affect the integrity of the tyre, which thus maintains intact its characteristics of resistance to mechanical stress and wear. Preferably, each of said recesses and/or said projections formed on said plate has a profile tapered away from said base surface of said plate.

Even more preferably, each of said recesses and/or said projections formed on said plate comprises a lateral surface extending away from said base surface of said plate and inclined at an angle of between 10° and 25° with respect to a direction perpendicular to said base surface of said plate.

More preferably, said lateral surface is inclined with an angle between 15° and 25°, and even more preferably between 19° and 21°, with respect to a direction perpendicular to said base surface of said plate.

In this way, the phase of removing the tyre from the mould is facilitated by avoiding a tearing of the elastomeric compound at the projections or recesses, in particular at adjacent projections or recesses.

Preferably, said lateral surface of said projections has a roughness of between 4 and 11 µm.

More preferably, said lateral surface of said projections has a roughness between 4 and 9 µm, more preferably between 5.5 and 8 µm.

Thanks to this feature, the light that enters the recesses formed by the projections on the tyre sidewall surface is reflected against the recess walls many times over, so as to reduce the fraction of light that re-emerges outside. In this way, the area of the sidewall corresponding to a recess is much darker than the area of the tyre without recesses, and allows an optical reader to accurately detect the position of the light and dark areas and then to reconstruct the image formed by the plurality of projections, such as an alphanumeric inscription or a QR code.

Even more preferably, said base surface of said plate has a roughness that is less than the roughness of said lateral surface of said projections.

In this way, the contrast between light and dark areas on the tyre sidewall moulded by the base surface of the insert and, consequently, the detection accuracy of the optical reader are increased.

Preferably, all said recesses and/or said projections are formed on said plate. Preferably, said plurality of recesses and/or projections forms a QR code. Preferably, said projections are made of metal material.

Preferably, said plate is made of metal material.

Preferably, said projections and said plate are made of the same material.

More preferably, said plate and said projections are made of steel.

In a preferred embodiment, said plate has a thickness of between 0.5 and 2.

In particular, if a plurality of projections without recesses is formed on the plate, the thickness of the plate is advantageously between 0.5 and 1.5 mm, preferably about 1 mm, whereas, if a plurality of recesses is formed on the plate, then the thickness of the plate is slightly greater, for example between 1 and 2 mm, preferably about 1.5 mm.

Preferably, said plate, on the opposite side to said base surface of said plate, comprises at least one raised portion which has a thickness that is greater than the thickness of a region of said plate that is adjacent thereto.

Preferably, said raised portion has a thickness of between 4 and 6 mm.

Preferably, said raised portion is provided in a central region of said plate.

More preferably, a threaded hole is formed on said raised portion in order to allow said plate to be coupled to said main body.

The provision of the threaded hole on a raised portion of the plate with a thickness that is greater than the plate region adjacent thereto ensures that the coupling by screwing the plate to the main body is provided in a sufficiently rigid plate region, preventing the screw retention action from causing undesirable flexing of the plate and therefore of the base surface.

Preferably, when said plate is coupled to said main body, said at least one raised portion is received in a corresponding recess defined on said main body. Preferably, said plate, on the opposite side to said base surface of said plate, comprises a first raised portion and a second raised portion which are shaped differently to each other.

In this way, it is possible to use the different shaping of the provided raised portions on the plate and of the corresponding recesses on the main body to ensure that the coupling between the plate and the main body is achieved in accordance with a predetermined orientation.

Preferably, said ridge has a height between 1 and 2 mm.

In this way, the plate rests on the main body substantially only at the ridge. Preferably, at said peripheral rim, said plate has a thickness that is less than the thickness of a region of said plate that is adjacent thereto.

Preferably, said peripheral rim has a thickness of between 0.3 and 0.8 mm.

In this way, the peripheral region of the plate is more flexible and allows better adaptability for contact with the ridge of the main body and therefore, overall, a greater seal between the plate and main body.

In an alternative embodiment, it is provided that the ridge is provided on the peripheral rim of said plate, on the opposite side to the base surface of the plate.

In a preferred embodiment, said plate has a smaller surface area than said main body such that part of said base surface of said insert is formed by a perimeter edge of said main body.

The surface of the plate preferably has the same shaping as the surface of the main body on which it is coupled, but slightly smaller dimensions. Thus, when the plate is coupled to the main body, a perimeter rim of a mating surface of the main body with the plate remains exposed, not covered by the plate, thus becoming part of the base surface intended to come into contact with the sidewall surface of the tyre to be moulded.

Thanks to the perimeter rim, any dimensional tolerances in the construction of the plate may be easily compensated, while the dimensional accuracy of the main body to be inserted into the seat formed on the sidewall plate remains assured with as little play as possible, so as to avoid the infiltration of elastomeric material between the main body and seat.

Preferably, said perimeter rim has a width between 0.3 and 1 mm, more preferably about 0.5 mm.

In one embodiment, said plurality of projections and/or recesses is formed by means of laser ablation of the plate.

In this way, the material on one surface of the plate is removed by ablation of successive layers, which, with appropriate guidance of the laser, make it possible, in one case, to form both the projections and the base surface of the plate, and in the other case the recesses in the base surface of the plate.

Preferably, said removal of material by laser is carried out using a power between 20 and 60 KW, a frequency between 100 and 300 KHz and a speed between 800 and 1500 mm/s.

By appropriately varying the laser operating parameters within these ranges, it is possible to identify the most suitable combination to optimise the ablation of material according to the requirements of dimensional accuracy, roughness and productivity.

In another preferred embodiment, said plurality of projections and/or recesses is formed by means of an additive printing technique.

In this way it is possible to optimise and speed up the production times of the plate and consequently the production times of the insert.

In a first embodiment, said additive printing is carried out by successive repetition of the steps of:
- depositing a layer of metal material powder and
- at least partially melting said powder by laser in the regions of said layer which are intended to form said projections.

In this first embodiment, the projections are made by means of a metal powder layer deposition technique, where each layer is subjected to a partial melting at the regions that form the projections. At the end of the layer deposition and melting phase of the regions forming the projections, the part of metal powder not melted by the laser is removed.

Preferably, the entire plate is formed according to said first form of additive printing.

In this way, the plate has a homogeneous structure and properties both at the projections and at the remaining part of the plate. Furthermore, this technique makes it possible to obtain a plate with good dimensional accuracy in all its components, with particular reference to the projections.

In a second embodiment, said additive printing is carried out by successive repetition of the steps of:
- depositing metal material powder at the points on said base surface of said plate intended to form said projections, and
- at least partially melting said powder by laser.

In this case, the metal powder is deposited only at the points where it is needed and where it is then partially melted by the laser.

In this way it is possible to use a pre-existing plate and form the projections directly on its surface.

Preferably, after said laser ablation or after said additive printing, at least said plurality of projections is subjected to a sandblasting treatment.

This makes it possible to obtain the desired roughness value of the side walls of the projections obtained at the end of the material removal phase by laser ablation.

Moreover, the sandblasting treatment is on the whole economical and makes it possible to "smooth out", to the best possible extent, any irregularities in the lateral surface of the projections, such as points and micro-hooks, which may cling to the elastomeric compound of the tread band during the moulding phase, respecting the desired degree of roughness.

In addition, the sandblasting treatment, which necessarily also involves the base surface as well as the projections, increases the contrast between light and dark areas of the image moulded by the tyre sidewall insert.

In fact, sandblasting exerts a more effective action of smoothing and rounding of the ridges and points on the base surface of the insert, oriented substantially perpendicularly to the trajectory over which the particles are thrown against the insert, while on the lateral surfaces of the projections, inclined with respect to the throw trajectory, this action is less violent, so that the roughness of the lateral surfaces decreases less than the value of the base surface.

In this way, the sidewall surface of the tyre in contact with the base surface is smoother than the side surface of the recesses formed on the tyre sidewall by the projections, and this increases the difference between the brightness of the recesses and the brightness of the sidewall surface between the recesses. Preferably, said sandblasting treatment is carried out using glass microspheres. The use of this material is suitable for smoothing the micro-points and micro-hooks of the side walls of the projections without being too abrasive.

Preferably, said glass microspheres have a diameter between 20 and 100 µm.

In this way, the particles may also effectively reach the spaces between adjacent projections.

Preferably, said glass microspheres are thrown towards at least said plurality of projections from a distance of between 10 and 50 cm.

Preferably, said glass microspheres are thrown towards at least said plurality of projections at a pressure of between 5 and 10 bar.

In one embodiment, after said laser ablation technique or said additive printing technique, a coating layer is applied to at least said plurality of projections.

This offers an additional way to achieve the desired roughness values of the side walls of the projections. In particular, this treatment is an alternative or a supplement to the sandblasting treatment described above.

The coating layer is arranged on the crests and valleys of the surfaces in a manner not perfectly homogeneous, making the profile of the surfaces more uniform and thus reducing the roughness value.

In a first preferred embodiment, said coating layer is applied by depositing a composite material formed by polymer particles dispersed in a metal matrix. Preferably, said metal matrix comprises an alloy of nickel and phosphorus. Preferably, said polymeric particles are particles based on tetrafluoroethylene.

In a second preferred embodiment, said coating layer is applied by galvanic deposition of metal chrome.

Preferably, said deposition is performed until a coating layer thickness of 5 to 15 µm is achieved.

Preferably, said plate is applied to said main body by means of a screw coupling.

The characteristics and advantages of the invention will become clearer from the detailed description of a preferred exemplary embodiment, illustrated by way of indication and in a non-limiting manner with reference to the accompanying drawings, in which:

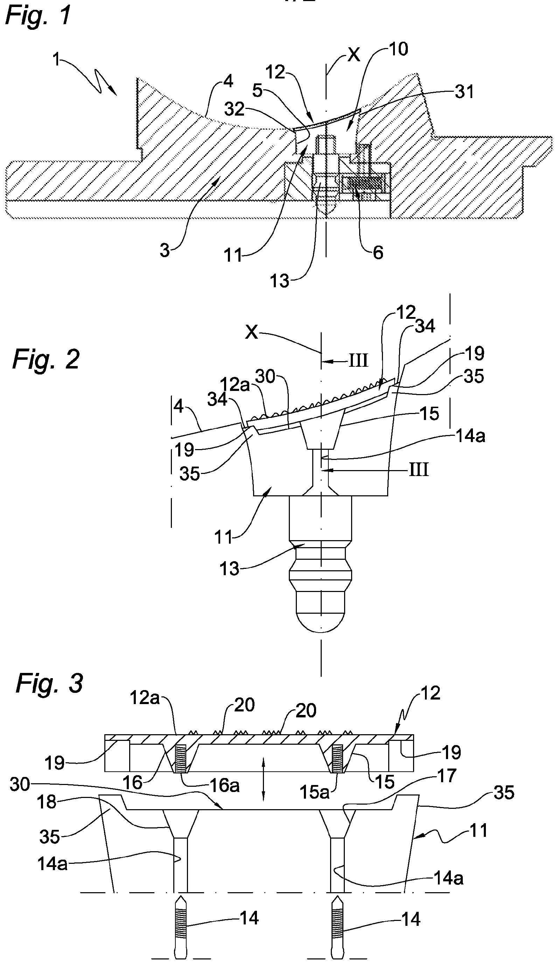

- figure 1 is a schematic cross-sectional view of a portion of a vulcanising mould for tyres for vehicle wheels, fitted with an insert produced in accordance with the present invention;
- figure 2 is a schematic view on an enlarged scale and shown in section of the insert when coupled to the mould of figure 1;
- figure 3 is a schematic view on a further enlarged scale and shown in section along line III-III of a portion of the insert of figure 2, in a decoupled configuration;
- figure 4 is a schematic plan view from above of the insert of figure 2;
- figure 5 is a schematic view from below of an insert component of figure 2.

With reference to the accompanying figures, a vulcanising mould for tyres for vehicle wheels produced in accordance with this invention is denoted overall by 1. The mould 1 has a conventional overall general structure and comprises a closed moulding chamber in which a green tyre is received for the moulding and vulcanisation process.

The tyre has a generic toroidal shape developed around a rotational axis and comprises a tyre structure that is conventional *per se,* on which an elastomeric material tread band is arranged in a radially outer position, on which tread band there is defined a tread surface intended for contact with a road surface, as well as a pair of sidewalls, extended from the ends of the tread surface towards the rotational axis.

With reference to the radial and axial directions of the tyre when it is received in the mould 1, the moulding chamber is bounded radially by a plurality of heads, generally at least 8, which are suitably shaped to form annular sectors and which are substantially intended to contact the tread band of the tyre, and axially by a pair of sidewall plates 3, which are substantially intended to contact the tyre sidewalls.

Both the heads and sidewall plates 3 may be moved away from each other to allow the mould to be opened and the green tyre to be inserted into the moulding chamber and removed once it has been moulded and vulcanised.

A heating device is associated with the heads and sidewall plates 3 to transmit to the green tyre the heat necessary to reach the temperature intended for vulcanisation.

Inside the moulding chamber of the mould 1, a membrane, which in itself is conventional and not shown in the accompanying figures, may be provided and may be expanded to compress the green tyre against the inner walls of the heads and sidewall plates 3 at a predetermined pressure.

On the inner walls of the mould 1 intended to come into contact with the green tyre, corresponding pluralities of raised portions and recesses are suitably formed so as to obtain, by moulding on the radially outer surface of the tread band, the configuration of the tread pattern and, on the sidewalls, writing and images useful, for example, for providing visible information to the user regarding the characteristics of the tyre.

In particular, on at least one sidewall plate 3, and preferably on both sidewall plates 3, a moulding surface 4 is defined and is intended to contact the outer surface of a tyre sidewall.

On the moulding surface 4 of the sidewall plate 3 there is also provided, in a suitable position, a seat 5 to accommodate, with the option of removal, an insert 10.

The insert 10 comprises a main body 11, of generally parallelepiped form, so arranged as to be accommodated in the seat 5, a plate 12 coupled to the main body 11 at a coupling surface 30 thereof, as well as a stem 13 extended from the main body 11, on the opposite side to the plate 12 along a direction X generally perpendicular thereto.

On the sidewall plate 3 there is also provided a locking device 6 to engage the stem 13 and hold the insert 10 firmly engaged in the seat 5.

The locking device 6 may be of the screw type, or snap type, or magnetic type, or it may adopt any other system suitable for holding the insert 10 inside the seat 5 removably.

Preferably, from the main body 11 there is also extended, in an eccentric position, a plug (not shown in the figures) intended to be received in a dedicated recess formed inside the seat 5. The engagement of the plug in the corresponding recess is necessary so that the insert may be fully received in the seat 5 and ensures that the insert 10 is inserted in the seat 5 with a predetermined orientation.

Preferably, the main body 11 has a profile tapered away from the plate 12, so as to allow a substantially tight fit with the sidewall plate 3, and so as to prevent, as far as possible, any elastomeric material from entering the seat 5.

The mating surface 30 of the main body 11 is curved and, seen from above, has a generally rectangular form with rounded vertices. On it there are identified an upper edge 31, a lower edge 32, connected to each other by a pair of opposite side edges 33, all together defining a perimeter edge 34 of the main body 11.

In the preferred example described here, the mating surface 30 has a length of approximately 34 mm and a width of approximately 19 mm.

The upper edge 31 is positioned in the seat 5 in a radially outer position, intended to face the tread surface of the tyre, while the lower edge 32 is positioned in the seat 5 in a radially inner position, intended to face the ends (the beads) of the tyre. Preferably, to facilitate the insertion of the insert 10 into the seat 5 with the correct orientation, the upper edge 31 is connected to the side edges 33 with a first radius of curvature, while the lower edge 32 is connected to the side edges 33 with a second radius of curvature, smaller than the first radius of curvature.

In particular, the first radius of curvature is about 7 mm, while the second radius of curvature is about 5 mm.

A ridge 35 is also defined along the perimeter edge 34 of the mating surface 30, which ridge is extended towards the plate 12 by a height of about 1-2 mm.

The plate 12 has a predominantly two-dimensional extent, with a thickness of about 1 mm.

On the plate 12, on the opposite side to the main body 11, a base surface 12a is defined, facing towards the outside of the sidewall plate 3 when the insert 10 is received in the seat 5.

In addition, an indentation 19 is defined along the entire peripheral rim of the plate 12 and is directed towards the mating surface 30 of the main body 11, on the opposite side to the base surface 12a. At the indentation 19, the plate 12 is about 0.5 mm thick.

The plate 12 is coupled to the main body 11 in such a way that the ridge 35 of the main body 11 contacts the plate 12 substantially at the indentation 19.

The base surface 12a of the plate 12 has a shaping entirely analogous to that of the mating surface 30, but with slightly smaller dimensions, so that a portion of the ridge 35 arranged further outwards, defining the perimeter edge 34, is not covered by the plate 12.

Therefore, the perimeter edge 34 forms, together with the base surface 12a of the plate 12, the base surface of the insert 10, which is intended to contact the tyre sidewall during the vulcanising and moulding phase.

The ridge portion 35 not covered by the plate 12, defining the perimeter edge 34, has a substantially constant width along the contour of the plate 12, equal to approximately 0.5 mm, and is lowered with respect to the base surface 12a by a measure equal to the thickness of the plate 12 at the indentation 19.

As mentioned above, the base surface 12a of the plate 12 faces the inside of the moulding chamber and is intended for contact with the tyre sidewall.

The fit of the insert 10 in the seat 5 is such that the base surface 12a is substantially aligned with the moulding surface 4 of the sidewall plate 3. In particular, the base surface 12a of the plate 12 has a curved profile, entirely analogous to the profile of the moulding surface 4, so as to maintain the continuity of the overall surface trend. In this way, when the insert 10 is received in the seat 5, the base surface 12a of the plate 12 completes and integrates the moulding surface 4 at the seat 5, with the perimeter edge 34 slightly lowered to mark the passage between the two surfaces.

The plate 12 is preferably made of steel and is coupled to the main body 11 by means of a pair of screws 14 extended parallel to the X-direction, through holes 14a formed so as to pass through the main body 11.

The screws 14 engage the plate 12 in corresponding threaded holes 15a and 16a formed respectively in a first and second raised portion 15 and 16 extended on the opposite side to the base surface 12a by a height of approximately 5 mm. In this way, the thickness of the plate 12 at the raised portions 15 and 16 is greater than the thickness of the plate 12 surrounding same.

The threaded holes 15a and 16a are blind so that the base surface 12a is kept intact.

The first and second raised portions 15 and 16 have a slightly truncated cone shape with different diameters, for example approximately 7 mm and approximately 8 mm, and on the mating surface 30 of the main body 11 there are corresponding recesses 17 and 18 specifically shaped to accommodate the raised portions 15 and 16.

On the plate 12, instead, there is formed a plurality of projections 20, extended from the base surface 12a on the opposite side to the main body 11, along a direction substantially perpendicular thereto.

The projections 20 are arranged on the base surface 12a according to a predefined configuration, so as to define, overall, an informative image, for example in the form of alphanumeric characters and/or a QR code.

The projections 20 are substantially equal to each other and have a truncated cone profile defined by a lateral surface extended from the base surface 12a.

The lateral surface of the projections 20 is inclined at an angle of approximately 20° to the X-direction and has a roughness Ra of approximately 5 to 9 µm.

Each projection 20 also has a height of approximately 0.6 mm and a diameter varying between a value of approximately 0.45 mm at the base and a value of approximately 0.1 mm at its respective top.

The base surface 12a preferably has a roughness lower than the roughness of the lateral surface of the projections 20.

The plate 12 is preferably made of steel.

In a first embodiment, the plate 12 is produced from a steel sheet suitably surface-treated by laser.

In particular, the surface of the plate 12 intended to form the base surface 12a is subjected to a treatment of material removal by laser (laser ablation technique) differently in its various regions, so that in some areas the material is removed uniformly, defining the base surface 12a of the plate, this being substantially smooth, while in other areas the processing is carried out by removing the material present around specific portions of the plate, so as to form the projections 20.

In particular, the laser treatment is carried out maintaining the beam substantially perpendicular to the surface being processed and using a power between 20 and 60 KW, a frequency between 100 and 300 KHz and a speed between 800 and 1500 mm/s.

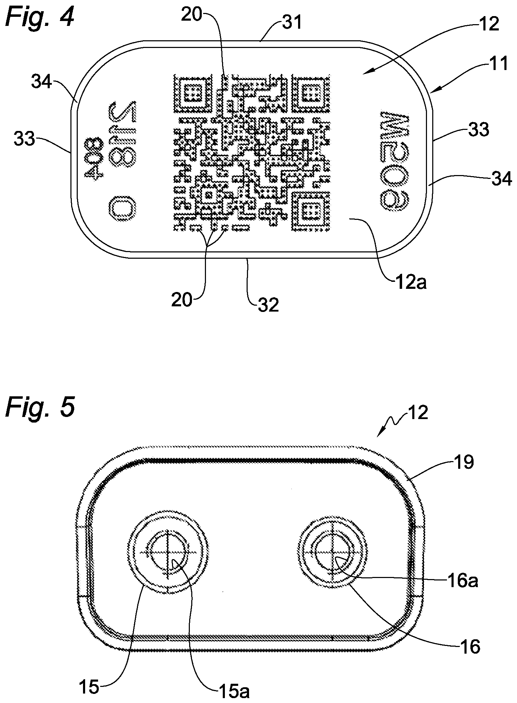

The positioning of the regions provided with projections 20 and of the regions formed only by the base surface 12a is predetermined according to the information to be moulded on the tyre sidewall. Preferably, the projections 20 define a QR code, as shown in Figure 4.

On the base surface 12a, additional lettering in alphanumeric characters may be produced, each of which characters may be obtained directly in high or low relief. In a second embodiment, the plate 12 is obtained as a piece by means of an additive printing technique.

In particular, the procedure for producing the plate 12 may be as follows.

A first layer of steel powder is first deposited on a working surface, the grain size and composition characteristics of which powder are suitable for this printing technique.

The layer of steel powder, of appropriate thickness, is then laser-treated in the regions of the layer which form part of the plate to be made, in such a way that the powder granules from those regions are solidified with each other by partial melting and form a single solid piece.

A second layer of steel powder is then deposited and, again, will be laser-treated in those regions that form part of the plate in order to solidify it and form other solid pieces that may be joined to the solid pieces formed with the laser treatment of the underlying layer.

Layer-by-layer, the entire plate 12 is thus formed, including raised portions 15 and 16, the indentation 19, and the projections 20.

At the end of the laser ablation or additive printing phase according to the embodiments described above, the plate 12, and in particular its base surface 12a and the projections 20 formed thereon, is preferably subjected to a sandblasting treatment.

This treatment makes it possible to obtain the desired levels of surface roughness and, in addition, improves the ease with which the tyre may be removed from the mould, facilitating the detachment of the elastomeric compound from the insert, particularly at the projections, without tearing.

Preferably, the sandblasting treatment is conducted by throwing a jet of glass microspheres with dimensions of between 20 and 100 µm, in the absence of water, from a distance of 10 to 50 cm at a pressure of approximately 5-10 bar.

In addition or as an alternative to the sandblasting treatment, the projections 20 and the base surface 12a of the plate 12 may be subjected to a coating treatment that involves the application of a coating layer.

In a first exemplary embodiment of a coating treatment, the plate 12 may be treated by depositing, on its base surface 12a and on the projections 20, a composite material formed by particles based on tetrafluoroethylene and dispersed in a matrix based on a nickel-phosphorus alloy.

In particular, the matrix is an alloy formed by 87%-90% nickel and 10-13% phosphorus and contains from 20% to 30% by volume of tetrafluoroethylene particles less than 1 µm in size.

In a variant of the coating treatment, the coating layer, which is about 5 - 15 µm thick, is applied to the base surface 12a and to the projections 20 of the plate 12 by galvanic deposition of metallic chrome.

The plate 12 thus obtained is then coupled to the main body 11 in such a way that the first and second raised portions 15 and 16 are received in the respective recesses 17 and 18 and then held in position by means of the screws 14.

The insert 10, prepared in this way, is placed in the seat 5 and coupled to the stem 13 so that it is firmly held on the sidewall plate 3 and with the base surface 12a of the plate 12 substantially aligned with the moulding surface 4 and separated from same by the perimeter edge 34.

The vulcanising and moulding process of the tyre is carried out in the usual manner, introducing the green tyre into the moulding chamber, closing the mould 1, expanding the internal membrane, and heating the mould.

During this phase, the green tyre sidewall is pressed against the mould surface 4 and the base surface 12a of the insert in such a way that the outer surface of the sidewall is imprinted with the raised portion on the base surface 12a, in particular with the image formed by the projections 20.

Once the vulcanising phase is complete, the mould 1 is opened and the moulded and vulcanised tyre is removed.

When the information to be moulded on the tyre sidewall using the insert 10 needs to be updated, the insert 10 is removed from the seat 5.

The plate 12 is then removed from the main body 11, removing the screws 14, and replaced by a new plate, identical to the plate 12 except for the information given on the base surface 12a and therefore, in particular, the arrangement of the projections 20.

The insert 10 equipped with the new plate may then be repositioned in the seat 5 of the sidewall plate 3 to resume tyre moulding and vulcanising tasks.

## Claims

1. Insert (10) for a mould for vulcanising tyres for vehicle wheels, comprising:
- a main body (11) arranged to be received in a seat (5) formed on a moulding surface (4) of said mould (1),
- a base surface (12a) arranged to integrate said moulding surface (4) in the region of said seat (5) when said main body (11) is received in said seat,
- a plurality of projections (20) and/or recesses formed on said base surface (12a) on the opposite side to said main body (11),
wherein at least one part of said base surface (12a) and of said plurality of projections (20) and/or recesses is defined on a plate (12) removably applied to said main body (11),
**characterized in that**
a ridge (35) is defined along a perimeter edge (34) of said main body (11) facing said plate (12), on which ridge a peripheral rim of said plate (12) is supported.

2. Insert according to claim 1, wherein each of said recesses and/or said projections (20) formed on said plate (12) comprises a base, at said base surface (12a) of said plate, which base has a diameter of between 0.4 and 0.49 mm.

3. Insert according to either claim 1 or claim 2, wherein each of said recesses and/or said projections (20) formed on said plate (12) extends from said base surface (12a) of said plate by a height of between 0.5 and 0.7 mm.

4. Insert according to any one of the preceding claims, wherein each of said recesses and/or said projections (20) formed on said plate (12) has a profile tapered away from said base surface (12a) of said plate.

5. Insert according to any one of the preceding claims, wherein each of said recesses and/or said projections (20) formed on said plate (12) comprises a lateral surface extending away from said base surface (12a) of said plate and inclined at an angle of between 10° and 25° with respect to a direction perpendicular to said base surface (12a) of said plate.

6. Insert according to claim 5, wherein said lateral surface of said projections (20) has a roughness of between 4 and 11 µm.

7. Insert according to either claim 5 or claim 6, wherein said base surface (12a) of said plate has a roughness that is less than the roughness of said lateral surface of said projections.

8. Insert according to any one of the preceding claims, wherein said plate (12) has a thickness of between 0.5 and 2 mm.

9. Insert according to any one of the preceding claims, wherein said plate (12), on the opposite side to said base surface (12a) of said plate, comprises at least one raised portion (15, 16) which has a thickness that is greater than the thickness of a region of said plate that is adjacent thereto.

10. Insert according to claim 9, wherein a threaded hole (15a, 16a) is formed on said raised portion (15, 16) in order to allow said plate (12) to be coupled to said main body (11).

11. Insert according to any one of claims 9 to 10, wherein, when said plate (12) is coupled to said main body, said at least one raised portion (15, 16) is received in a corresponding recess (17, 18) defined on said main body (11).

12. Insert according to any one of claims 9 to 11, wherein said plate (12), on the opposite side to said base surface (12a) of said plate, comprises a first raised portion (15) and a second raised portion (16) which are shaped differently to each another.

13. Insert according to any one of the preceding claims, wherein, at said peripheral rim, said plate (12) has a thickness that is less than the thickness of a region of said plate that is adjacent thereto.

14. Insert according to any one of the preceding claims, wherein said plate (12) has a smaller surface area than said main body (11) such that part of said base surface of said insert (10) is formed by a perimeter edge (34) of said main body (11).

15. Mould (1) for vulcanising tyres, comprising:
- at least one sidewall plate (3) on which a moulding surface (4) is defined which is intended for contacting an external surface of a sidewall of a green tyre,
- a removable insert (10) arranged to be received in a seat (5) formed on said moulding surface and comprising a base surface intended for contacting a portion of said external surface of the sidewall of the green tyre,
wherein said insert (10) is according to any one of the preceding claims.

## Patentansprüche

1. Einsatz (10) für eine Form zum Vulkanisieren von Reifen für Fahrzeugräder, der umfasst:
- einen Hauptkörper (11), der dafür ausgelegt ist, in einem Sitz (5) aufgenommen zu werden, der auf einer Formfläche (4) der Form (1) gebildet ist,
- eine Basisfläche (12a), die dafür ausgelegt ist, die Formfläche (4) im Bereich des Sitzes (5) zu integrieren, wenn der Hauptkörper (11) in dem Sitz aufgenommen ist,
- eine Vielzahl von Vorsprüngen (20) und/oder Vertiefungen, die auf der Basisfläche (12a) auf der dem Hauptkörper (11) gegenüberliegenden Seite gebildet sind,
wobei mindestens ein Teil der Basisfläche (12a) und der Vielzahl von Vorsprüngen (20) und/oder Vertiefungen auf einer Platte (12) definiert ist, die abnehmbar auf dem Hauptkörper (11) angebracht ist,
**dadurch gekennzeichnet, dass**
entlang einer Umfangskante (34) des Hauptkörpers (11), die der Platte (12) zugewandt ist, eine Rippe (35) definiert ist, auf der ein Umfangsrand der Platte (12) abgestützt ist.

2. Einsatz nach Anspruch 1, wobei jede der auf der Platte (12) gebildeten Aussparungen und/oder jeder der Vorsprünge (20) eine Basis an der Basisfläche (12a) der Platte umfasst, wobei die Basis einen Durchmesser zwischen 0,4 und 0,49 mm aufweist.

3. Einsatz nach Anspruch 1 oder Anspruch 2, wobei jede der auf der Platte (12) gebildeten Aussparungen und/oder jeder der Vorsprünge (20) sich von der Basisfläche (12a) der Platte um eine Höhe zwischen 0,5 und 0,7 mm erstreckt.

4. Einsatz nach einem der vorhergehenden Ansprüche, wobei jede der auf der Platte (12) gebildeten Aussparungen und/oder jeder der Vorsprünge (20) ein von der Basisfläche (12a) der Platte weg verjüngtes Profil aufweist.

5. Einsatz nach einem der vorhergehenden Ansprüche, wobei jede der auf der Platte (12) gebildeten Aussparungen und/oder jeder der Vorsprünge (20) eine Seitenfläche umfasst, die sich von der Basisfläche (12a) der Platte weg erstreckt und in einem Winkel zwischen 10° und 25° in Bezug auf eine Richtung senkrecht zur Basisfläche (12a) der Platte geneigt ist.

6. Einsatz nach Anspruch 5, wobei die Seitenfläche der Vorsprünge (20) eine Rauhigkeit zwischen 4 und 11 µm aufweist.

7. Einsatz nach Anspruch 5 oder 6, wobei die Basisfläche (12a) der Platte eine geringere Rauhigkeit aufweist als die Rauhigkeit der Seitenfläche der Vorsprünge.

8. Einsatz nach einem der vorhergehenden Ansprüche, wobei die Platte (12) eine Dicke zwischen 0,5 und 2 mm aufweist.

9. Einsatz nach einem der vorhergehenden Ansprüche, wobei die Platte (12) auf der der Basisfläche (12a) der Platte gegenüberliegenden Seite mindestens einen erhabenen Abschnitt (15, 16) umfasst, der eine Dicke aufweist, die größer ist als die Dicke eines Bereichs der Platte, der daran angrenzt.

10. Einsatz nach Anspruch 9, wobei in dem erhabenen Abschnitt (15, 16) ein Gewindeloch (15a, 16a) gebildet ist, damit die Platte (12) mit dem Hauptkörper (11) gekoppelt werden kann.

11. Einsatz nach einem der Ansprüche 9 bis 10, wobei, wenn die Platte (12) mit dem Hauptkörper gekoppelt ist, der mindestens eine erhabene Abschnitt (15, 16) in einer entsprechenden Aussparung (17, 18) aufgenommen wird, die an dem Hauptkörper (11) definiert ist.

12. Einsatz nach einem der Ansprüche 9 bis 11, wobei die Platte (12) auf der der Basisfläche (12a) der Platte gegenüberliegenden Seite einen ersten erhabenen Abschnitt (15) und einen zweiten erhabenen Abschnitt (16) umfasst, die unterschiedlich zueinander geformt sind.

13. Einsatz nach einem der vorhergehenden Ansprüche, wobei die Platte (12) an dem Umfangsrand eine Dicke aufweist, die geringer ist als die Dicke eines daran angrenzenden Bereichs der Platte.

14. Einsatz nach einem der vorhergehenden Ansprüche, wobei die Platte (12) eine kleinere Oberfläche als der Hauptkörper (11) aufweist, so dass ein Teil der Basisfläche des Einsatzes (10) durch einen Umfangsrand (34) des Hauptkörpers (11) gebildet wird.

15. Form (1) zum Vulkanisieren von Reifen, die umfasst:
- mindestens eine Seitenwandplatte (3), auf der eine Formfläche (4) definiert ist, die dazu bestimmt ist, eine Außenfläche einer Seitenwand eines Rohreifens zu berühren,
- einen herausnehmbaren Einsatz (10), der dafür ausgelegt ist, in einem Sitz (5) aufgenommen zu werden, der auf der Formfläche gebildet ist und eine Basisfläche umfasst, die dazu bestimmt ist, einen Abschnitt der Außenfläche der Seitenwand des Rohreifens zu berühren,
wobei der Einsatz (10) einem der vorhergehenden Ansprüche entspricht.

## Revendications

1. Pièce d'insertion (10) pour un moule pour vulcaniser des pneus pour des roues de véhicule, comprenant :
- un corps principal (11) agencé pour être reçu dans un siège (5) formé sur une surface de moulage (4) dudit moule (1),
- une surface de base (12a) agencée pour intégrer ladite surface de moulage (4) dans la région dudit siège (5) lorsque ledit corps principal (11) est reçu dans ledit siège,
- une pluralité de saillies (20) et/ou d'évidements formés sur ladite surface de base (12a) sur le côté opposé par rapport audit corps principal (11),
dans laquelle au moins une partie de ladite surface de base (12a) et de ladite pluralité de saillies (20) et/ou d'évidements est définie sur une plaque (12) appliquée de façon amovible sur ledit corps principal (11),
**caractérisé en ce que**
une nervure (35) est définie le long d'un bord périmétrique (34) dudit corps principal (11) faisant face à ladite plaque (12), sur laquelle nervure un rebord périphérique de ladite plaque (12) est supporté.

2. Pièce d'insertion selon la revendication 1, dans laquelle chacun(e) desdits évidements et/ou desdites saillies (20) formé(e) sur ladite plaque (12) comprend une base, sur ladite surface de base (12a) de ladite plaque, laquelle base a un diamètre d'entre 0,4 et 0,49 mm.

3. Pièce d'insertion selon la revendication 1 ou la revendication 2, dans laquelle chacun(e) desdits évidements et/ou desdites saillies (20) formé(e) sur ladite plaque (12) s'étend depuis ladite surface de base (12a) de ladite plaque selon une hauteur d'entre 0,5 et 0,7 mm.

4. Pièce d'insertion selon l'une quelconque des revendications précédentes, dans laquelle chacun(e) desdits évidements et/ou desdites saillies (20) formé(e) sur ladite plaque (12) a un profil effilé à l'opposé de ladite surface de base (12a) de ladite plaque.

5. Pièce d'insertion selon l'une quelconque des revendications précédentes, dans laquelle chacun(e) desdits évidements et/ou lesdites saillies (20) formé(e) sur ladite plaque (12) comprend une surface latérale s'étendant à l'opposé de ladite surface de base (12a) de ladite plaque et inclinée à un angle d'entre 10 ° et 25 ° par rapport à une direction perpendiculaire à ladite surface de base (12a) de ladite plaque.

6. Pièce d'insertion selon la revendication 5, dans laquelle ladite surface latérale desdites saillies (20) a une rugosité d'entre 4 et 11 µm.

7. Pièce d'insertion selon la revendication 5 ou la revendication 6, dans laquelle ladite surface de base (12a) de ladite plaque a une rugosité qui est inférieure à la rugosité de ladite surface latérale desdites saillies.

8. Pièce d'insertion selon l'une quelconque des revendications précédentes, dans laquelle ladite plaque (12) a une épaisseur d'entre 0,5 et 2 mm.

9. Pièce d'insertion selon l'une quelconque des revendications précédentes, dans laquelle ladite plaque (12), sur le côté opposé par rapport à ladite surface de base (12a) de ladite plaque, comprend au moins une portion surélevée (15, 16) qui a une épaisseur qui est supérieure à l'épaisseur d'une région de ladite plaque qui est adjacente à celle-ci.

10. Pièce d'insertion selon la revendication 9, dans laquelle un trou fileté (15a, 16a) est formé sur ladite portion surélevée (15, 16) afin de permettre à ladite plaque (12) d'être couplée audit corps principal (11).

11. Pièce d'insertion selon l'une quelconque des revendications 9 à 10, dans laquelle, lorsque ladite plaque (12) est couplée audit corps principal, ladite au moins une portion surélevée (15, 16) est reçue dans un évidement correspondant (17, 18) défini sur ledit corps principal (11).

12. Pièce d'insertion selon l'une quelconque des revendications 9 à 11, dans laquelle ladite plaque (12), sur le côté opposé par rapport à ladite surface de base (12a) de ladite plaque, comprend une première portion surélevée (15) et une seconde portion surélevée (16) qui sont façonnées différemment l'une de l'autre.

13. Pièce d'insertion selon l'une quelconque des revendications précédentes, dans laquelle, audit rebord périphérique, ladite plaque (12) a une épaisseur qui est inférieure à l'épaisseur d'une région de ladite plaque qui est adjacente à celle-ci.

14. Pièce d'insertion selon l'une quelconque des revendications précédentes, dans laquelle ladite plaque (12) a une superficie plus petite que ledit corps principal (11) de telle sorte qu'une partie de ladite surface de base de ladite pièce d'insertion (10) soit formée par un bord périmétrique (34) dudit corps principal (11).

15. Moule (1) pour vulcaniser des pneus, comprenant :
- au moins une plaque de paroi latérale (3) sur laquelle une surface de moulage (4) est définie qui est prévue pour entrer en contact avec une surface externe d'une paroi latérale d'un pneu vert,
- une pièce d'insertion amovible (10) agencée pour être reçue dans un siège (5) formé sur ladite surface de moulage et comprenant une surface de base prévue pour entrer en contact avec une portion de ladite surface externe de la paroi latérale du pneu vert,
dans lequel ladite pièce d'insertion (10) est selon l'une quelconque des revendications précédentes.
